# EUROPEAN PATENT SPECIFICATION

(11) **EP 1 790 451 B1**
(45) Date of publication and mention of the grant of the patent: **20.06.2012**
(21) Application number: 06394024.1
(22) Date of filing: 24.11.2006
(51) Int. Cl.: B29C 44/20, B29C 44/28, B29C 44/32, B32B 5/18, B32B 5/20, E04C 2/20

(54) **Manufacturing a rigid polymeric insulating foam board**
Herstellung einer starren Polymerschaumisolierplatte
Procédé de fabrication d'un panneau en mousse polymerique isolante

(30) Priority: 25.11.2005 IE 20050785
(43) Date of publication of application: 30.05.2007
(73) Proprietor: Kingspan Research and Developments Limited, Kingscourt, County Cavan (IE)
(72) Inventor: Rochefort, Malcolm, Kingscourt County Cavan (IE); McCabe, Thomas, Kingscourt County Cavan (IE)
(74) Representative: O'Brien, John Augustine

(56) References cited:
- EP-A- 0 940 249
- GB-A- 1 232 648
- GB-A- 2 332 642
- US-A1- 6 140 383
- US-A1- 2005 042 436
- DATABASE WPI Week 200148 Derwent Publications Ltd., London, GB; AN 2001-442706 XP002425849 & CN 1 294 966 A (LIN H) 16 May 2001 (2001-05-16)

## Description

### Introduction

The invention relates to the manufacture of a rigid polymeric insulating foam board of the type comprising upper and lower facers and a foam insulating body between the facers.

There are several known methods for manufacturing such rigid polymeric insulating foam boards. There is, however, a need to optimise the rate of production of such boards with optimised quality, reduced raw material costs, reduced labour costs and reduced reject rates.

This invention is directed towards providing an improved manufacturing process which will meet at least some of these requirements.

### Statements of Invention

US 6,140,383-A describes a method for manufacturing a rigid polymeric insulating foam board of the type comprising a base facer, an upper facer, and a foam layer between the facers, the method comprising the steps of:
leading a base facer to a lay-down area;
laying liquid foam reactants onto the base facer;
leading an upper facer over the foam reactants;
leading the sandwich thus formed into an oven;
leading the foam board from the oven through a foam curing station;
cutting the cured foam board to a length; and
in-line trimming the side edges of the foam board.

The invention is characterised in that:
the base facer is heated by leading the base facer over a heated bed prior to laying down of liquid foam reactants;
the liquid foam reactants are laid down onto the heated base facer in a plurality of spaced-apart streams through separate nozzles;
the residence time in the curing station is at least 30 seconds; and
in that the method comprises the step, after cutting the cured foam board to length and prior to in-line trimming of the side edges of the foam board of cooling the cut lengths of foam board by leading them through a cooling station.

In one embodiment the residence time of the foam board in the curing station is at least 45 seconds. Preferably the residence time of the foam board in the curing station is approximately 60 seconds.

In one embodiment the curing station comprises a conveyor along which the foam board is led and a substantially closed housing for the conveyor. The method preferably comprises the step of directing heated air through the housing.

The heated air may be heated to a temperature of at least 30°C. The heated air may be heated to a temperature of up to 130°C. .

In one embodiment the cut lengths of board are coolcd by leading the boards through an in-line cooling station. The residence time of the foam board at the cooling station is preferably at least 4 minutes, and ideally at least 6 minutes.

In one case the cooling station comprises a cooling conveyor along which the foam board is led. The foam board may be led through ambient air for cooling.

The oven may comprise a laminator having upper and lower laminator conveyors, the upper laminator conveyor checking the rise of the foam and preventing over-expansion.

In one embodiment the method comprise the step of in-line cutting a rebated edge in the panel. The rebated edge may be a side edge and/or an end edge.

The invention also provides a rigid foam board when manufactured by a method of the invention.

### Brief Description of Drawings

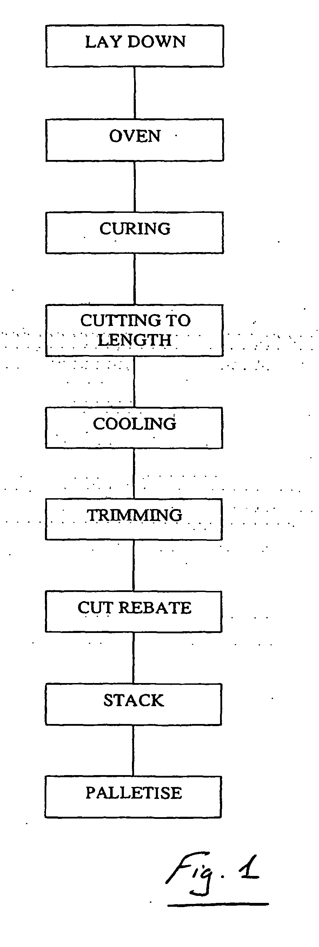

The invention will be more clearly understood from the following description thereof given by way of example only with reference to the accompanying drawings in which:-
Fig. 1 is a diagramatic view illustrating various steps in a method for manufacturing a foam board according to the invention:
Fig. 2 is a side cross sectional view of a lay down and oven region of the apparatus used in the method of the invention;
Fig. 3 is a cross sectional view on the line A-A in Fig. 2;
Fig. 4 is a cross sectional view on the line B-B in Fig. 2;
Fig. 5 is a cross sectional view on the line C-C in Fig. 3; and
Fig. 6 is a cross sectional view of a laminator used in the method of the invention.

### Detailed Description

The invention provides a method for manufacturing a rigid polymeric insulating foam board comprising a lower facer 1, an upper facer 2 and a foam layer 3 between the facers.

The upper and lower facers 1, 2 may be of the same or different flexible materials. For example the or each facer may be of a paper, foil, glass fibre, plastic or any other suitable material or laminate of two or more of such materials.

The foam 3 may be of any suitable type including a polyurethane, polyisocyanurate or phenolic foam formed from appropriate reactant ingredients.

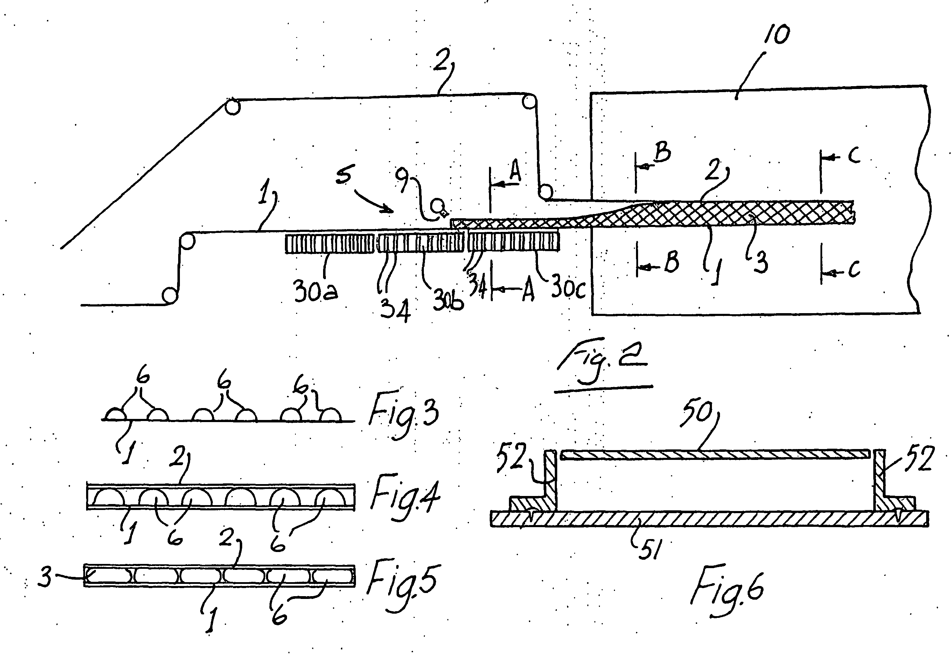

Referring particularly to Fig. 2, in the method of the invention the lower facer 1 is led from a supply reel to a lay-down area 5 at which streams 6 of liquid foam reactants are laid down onto the lower facer 1 through separate nozzles 9. The upper facer 2 is led from a supply reel over the foam reactants. The sandwich thus formed is then led through a laminator oven 10 in which the foam expands and a continuous length of rigid polymeric insulating foam board 15 is formed. The board 15 is led through an insulating tunnel 20 and then cut to a desired length.

The lower facer 1 is preheated by leading the facer 1 over a heated bed 30 which is heated to a temperature of from 35 to 85°C. In this case the heated bed 30 comprised three separate in-line sections 30a, 30b, 30c over which the facer 1 is led and the nozzles 9 through which the streams 6 of liquid foam reactants are led are located at the downstream end of the second heater bed section 30b. Each of the heater bed sections 30a, 30b, 30c has embedded channels for flow of heating fluid. Between the channels the bed sections have a plurality of through vertical passageways 34 through which a vacuum may be drawn by a vacuum box and associated vacuum pump. A vacuum may be applied to the passageways 34 to draw the facer 1 onto the surface of the heater to further enhance heat transfer to the facer.

The heater bed sections 30a, 30b are typically heated to about 60°C and as the facer 1 is led over the heated bed it is heated so that when the liquid foam reactants 6 impinge on the facer they are immediately heated. This speeds up the reaction and aids the spread of the streams 6 across the facer from the separated configuration of Fig. 3 on lay-down, through a partially spread configuration of Fig. 4 on entry to the laminator 10 to the fully spread and expanded configuration of Fig. 5. The facer 2 is also preheated by passage through portion of the laminator 10 which is typically at about 60°C prior to application to the foam. Because the facer 1 is preheated to the prepolymer reactants delivered through the nozzles 9 can be relatively cool which maximises the useful operating life of the nozzles 9. The preheating of the facer leads to a smooth outer surface finish as the separate streams 6 spread and integrate with one another forming flat outer surfaces. Thus, problems of de-lamination are avoided. The method therefore provides a rigid polymeric insulating board with an excellent consistent surface finish.

Referring to Fig. 6 the laminator 10 comprises an upper slatted conveyor 50 and a lower slatted conveyor 51 which define a fixed gap therebetween to which the foam sandwich is allowed to rise. The upper laminator conveyor 50 checks the rise of the foam and prevents over-expansion. In this case side flights 52 are fixed to and move with the lower conveyor 51. Each slat of the conveyor 51 has an associated side flight 52. A release agent is applied to the surface of the flights 52 facing the foam board sandwich to aid release of the flight 52 from the board as the board exits the laminator. The flights 52 provide clean side edges on the foam board which minimises wastage on trimming.

In the invention, the foam board is led from the oven through a foam curing station comprising a conveyor along which the foam board is led and a substantially closed housing for the conveyor. Heated air at a temperature of at least 30°C and possibly up to 130°C is directed through the housing. We have found that for optimum curing of the foam board the residence time in the curing station should be at least 30 seconds, preferably at least 45 seconds and ideally approximately 60 seconds. We have found that such a residence time is optimum in ensuring that the foam surfaces are fully cured. This is important in subsequent processing of the board such as cutting, trimming and/or rebating. Insufficient curing of the foam surfaces can lead to weaknesses resulting in loss of facing adhesion and/or cell collapse.

The cured foam board is then cut to length, and the cut lengths of board are then cooled, preferably by leading them along a cooling conveyor in ambient air. We have found that the residence time at the cooling station is preferably at least 4 minutes and ideally at least 6 minutes. This ensures that the board/foam temperature is such that it will not likely distort in further processing, for example in on-line rebating of one or more side edges of the cut board length, as well as in packaging and handling.

The invention is not limited to the embodiments hereinbefore described which may be varied in detail.

## Claims

1. A method for manufacturing a rigid polymeric insulating foam board of the type comprising a base facer (1), an upper facer (2), and a foam layer (3) between the facers (12), the method comprising the steps of:
leading a base facer (1) to a lay-down area (5);
laying liquid foam reactants onto the base facer (1);
leading an upper facer (2) over the foam reactants;
leading the sandwich thus formed into an oven (10);
leading the foam board (15) from the oven (10) through a foam curing station (20);
cutting the cured foam board (15) to a length; and
in-line trimming the side edges of the foam board (15);
**characterised in that**:
the base facer (1) is heated by leading the base facer (1) over a heated bed (30) prior to laying down of liquid foam reactants;
the liquid foam reactants are laid down onto the heated base facer (1) in a plurality of spaced-apart streams (6) through separate nozzles (9);
the residence time in the curing station (20) is at least 30 seconds; and
**in that** the method comprises the step, after cutting the cured foam board (15) to length and prior to in-line trimming of the side edges of the foam board (15), of cooling the cut lengths of foam board (15) by leading them through a cooling station.

2. A method as claimed in claim 1 wherein the residence time of the foam board (15) in the curing station (20) is at least 45 seconds.

3. A method as claimed in claim 1 or 2 wherein the residence time of the foam board (15) in the curing station (20) is approximately 60 seconds.

4. A method as claimed in any preceding claim wherein the curing station (20) comprises a conveyor along which the foam board (15) is led and a substantially closed housing (20) for the conveyor.

5. A method as claimed in claim 4 comprising the step of directing heated air through the housing (20).

6. A method as claimed in claim 5 wherein the heated air is heated to a temperature of at least 30°C.

7. A method as claimed in claim 5 or 6 wherein the heated air is heated to a temperature of up to 130°C.

8. A method as claimed in any preceding claim wherein the cut lengths of board (15) are cooled by leading the boards through an in-line cooling station.

9. A method as claimed in claim 8 wherein the residence time of the foam board (15) at the cooling station is at least 4 minutes.

10. A method as claimed in claim 9 wherein the residence time of the foam board (15) at the cooling station is at least 6 minutes.

11. A method as claimed in any of claims 8 to 10 wherein the cooling station comprises a cooling conveyor along which the foam board is led.

12. A method as claimed in claim 11 wherein the foam board is led through ambient air for cooling.

13. A method as claimed in any preceding claim wherein the oven (10) comprises a laminator having upper and lower laminator conveyors (50, 51), the upper laminator conveyor (80) checking the rise of the foam and preventing over-expansion.

14. A method as claimed in any preceding claim comprising the step of in-line cutting a rebated edge in the board (15).

15. A method as claimed in claim 14 wherein the rebated edge is a side edge.

16. A method as claimed in claim 14 or 15 wherein the rebated edge is an end edge.

## Patentansprüche

1. Verfahren zum Herstellen einer starren Polymerschaumstoff-Isolierplatte des Typs, der eine untere Außenhaut (1), eine obere Außenhaut (2) und eine Schaumstoffschicht (3) zwischen den Außenhäuten (12) umfasst, wobei das Verfahren folgende Schritte umfasst:
Führen einer unteren Außenhaut (1) zu einem Ablegebereich (5);
Legen flüssiger Schaumstoffreagenzien auf die untere Außenhaut (1);
Führen einer oberen Außenhaut (2) über die Schaumstoffreagenzien;
Führen des so gebildeten Sandwichs in einen Ofen (10);
Führen der Schaumstoffplatte (15) aus dem Ofen (10) durch eine Schaumstoff-Aushärtestation (20);
Schneiden der ausgehärteten Schaumstoffplatte (15) auf eine Länge; und
In-Line-Beschneiden der Seitenränder der Schaumstoffplatte (15);
**dadurch gekennzeichnet, dass**:
die untere Außenhaut (1) erwärmt wird, indem die untere Außenhaut (1) vor dem Ablegen der flüssigen Schaumstoffreagenzien über ein erwärmtes Bett (30) geführt wird;
die flüssigen Schaumstoffreagenzien in mehreren beabstandeten Strömen (6) durch getrennte Düsen (9) auf die erwärmte untere Außenhaut (1) abgelegt werden;
die Verweilzeit in der Aushärtestation (20) mindestens 30 Sekunden beträgt; und
**dadurch**, dass das Verfahren den Schritt des Abkühlens der geschnittenen Schaumstoffplattenstücke (15) durch Führen derselben durch eine Abkühlstation nach dem Schneiden der ausgehärteten Schaumstoffplatte (15) auf Länge und vor dem In-Line-Beschneiden der Seitenränder der Schaumstoffplatte (15) umfasst.

2. Verfahren nach Anspruch 1, wobei die Verweilzeit der Schaumstoffplatte (15) in der Aushärtestation (20) mindestens 45 Sekunden beträgt.

3. Verfahren nach Anspruch 1 oder 2, wobei die Verweilzeit der Schaumstoffplatte (15) in der Aushärtestation (20) ungefähr 60 Sekunden beträgt.

4. Verfahren nach einem der vorangehenden Ansprüche, wobei die Aushärtestation (20) eine Fördereinrichtung, entlang derer die Schaumstoffplatte (15) geführt wird, und eine im Wesentlichen geschlossene Umhausung (20) für die Fördereinrichtung umfasst.

5. Verfahren nach Anspruch 4, umfassend den Schritt des Leitens von erwärmter Luft durch die Umhausung (20).

6. Verfahren nach Anspruch 5, wobei die erwärmte Luft auf eine Temperatur von mindestens 30 °C erwärmt ist.

7. Verfahren nach Anspruch 5 oder 6, wobei die erwärmte Luft auf eine Temperatur von bis zu 130 °C erwärmt ist.

8. Verfahren nach einem der vorangehenden Ansprüche, wobei die geschnittenen Plattenstücke (15) abgekühlt werden, indem die Platten durch eine In-Line-Abkühlstation geführt werden.

9. Verfahren nach Anspruch 8, wobei die Verweilzeit der Schaumstoffplatte (15) an der Abkühlstation mindestens 4 Minuten beträgt.

10. Verfahren nach Anspruch 9, wobei die Verweilzeit der Schaumstoffplatte (15) an der Abkühlstation mindestens 6 Minuten beträgt.

11. Verfahren nach einem der Ansprüche 8 bis 10, wobei die Abkühlstation eine Abkühl-Fördereinrichtung umfasst, entlang welcher die Schaumstoffplatte geführt wird.

12. Verfahren nach Anspruch 11, wobei die Schaumstoffplatte zum Abkühlen durch Umgebungsluft geführt wird.

13. Verfahren nach einem der vorangehenden Ansprüche, wobei der Ofen (10) einen Laminator mit einer oberen und einer unteren Laminator-Fördereinrichtung (50, 51) umfasst, wobei die obere Laminator-Fördereinrichtung (80) das Anschwellen der Schaumstoffs kontrolliert und das übermäßige Ausdehnen verhindert.

14. Verfahren nach einem der vorangehenden Ansprüche, umfassend den Schritt des In-Line-Schneidens eines Fugenrands in der Platte (15).

15. Verfahren nach Anspruch 14, wobei es sich bei dem Fugenrand um einen Seitenrand handelt.

16. Verfahren nach Anspruch 14 oder 15, wobei es sich bei dem Fugenrand um einen Endrand handelt.

## Revendications

1. Procédé de fabrication d'un panneau de mousse isolant polymère rigide du type comportant une face de base (1), une face supérieure (2), et une couche de mousse (3) entre les faces (12), le procédé comportant les étapes consistant à :
faire avancer une face de base (1) jusqu'à une zone de pose (5) ;
poser des réactifs mousseux liquides sur la face de base (1) ;
faire avancer une face supérieure (2) sur les réactifs mousseux ;
faire avancer le sandwich ainsi formé dans un four (10) ;
faire avancer le panneau de mousse (15) en provenance du four (10) jusqu'à une station de cuisson de mousse (20) ;
découper le panneau de mousse cuit (15) selon une longueur ; et
effectuer un ébarbage en ligne des bords latéraux du panneau de mousse (15) ;
**caractérisé en ce que** :
la face de base (1) est chauffée par l'avance de la face de base (1) sur une plateforme chauffée (30) avant la pose des réactifs mousseux liquides ;
les réactifs mousseux liquides sont posés sur la face de base chauffée (1) dans une pluralité de flux espacés (6) au travers de buses séparées (9) ;
le temps de séjour dans la station de cuisson (20) est au moins de 30 secondes ; et
**en ce que** le procédé comporte, après la découpe du panneau de mousse cuit (15) selon une longueur et avant l'ébarbage en ligne des bords latéraux du panneau de mousse (15), l'étape consistant à refroidir les longueurs découpées du panneau de mousse (15) en les faisant avancer au travers d'une station de refroidissement.

2. Procédé selon la revendication 1, dans lequel le temps de séjour du panneau de mousse (15) dans la station de cuisson (20) est au moins de 45 secondes.

3. Procédé selon la revendication 1 ou la revendication 2, dans lequel le temps de séjour du panneau de mousse (15) dans la station de cuisson (20) est approximativement de 60 secondes.

4. Procédé selon l'une quelconque des revendications précédentes, dans lequel la station de cuisson (20) comporte un transporteur le long duquel le panneau de mousse (15) est avancé et un logement sensiblement fermé (20) pour le transporteur.

5. Procédé selon la revendication 4, comportant l'étape consistant à diriger de l'air chauffé au travers du logement (20).

6. Procédé selon la revendication 5, dans lequel l'air chauffé est chauffé à une température d'au moins 30°C.

7. Procédé selon la revendication 5 ou la revendication 6, dans lequel l'air chauffé est chauffé à une température pouvant atteindre 130°C.

8. Procédé selon l'une quelconque des revendications précédentes, dans lequel les longueurs découpées du panneau (15) sont refroidies par l'avance des panneaux au travers d'une station de refroidissement en ligne.

9. Procédé selon la revendication 8, dans lequel le temps de séjour du panneau de mousse (15) au niveau de la station de refroidissement est au moins de 4 minutes.

10. Procédé selon la revendication 9, dans lequel le temps de séjour du panneau de mousse (15) au niveau de la station de refroidissement est au moins de 6 minutes.

11. Procédé selon l'une quelconque des revendications 8 à 10, dans lequel la station de refroidissement comporte un transporteur de refroidissement le long duquel le panneau de mousse est avancé.

12. Procédé selon la revendication 11, dans lequel le panneau de mousse est avancé au travers de l'air ambiant à des fins de refroidissement.

13. Procédé selon l'une quelconque des revendications précédentes, dans lequel le four (10) comporte une contrecolleuse ayant des transporteurs de contrecolleuse supérieur et inférieur (50, 51), le transporteur de contrecolleuse supérieur (80) vérifiant la montée de la mousse et empêchant tout excès d'expansion.

14. Procédé selon l'une quelconque des revendications précédentes, comportant l'étape consistant à découper en ligne un bord rabattu dans le panneau (15).

15. Procédé selon la revendication 14, dans lequel le bord rabattu est un bord latéral.

16. Procédé selon la revendication 14 ou la revendication 15, dans lequel le bord rabattu est un bord d'extrémité.
